# EUROPEAN PATENT SPECIFICATION

(11) **EP 3 894 994 B1**
(45) Date of publication and mention of the grant of the patent: **25.11.2026**
(21) Application number: 19832818.9
(22) Date of filing: 12.12.2019
(51) Int. Cl.: G06F 3/01, A63F 13/00, G06F 3/03, G06T 7/00

(54) **OBJECT TRACKING ANIMATED FIGURE SYSTEMS AND METHODS**
SYSTEME UND VERFAHREN ZUR OBJEKTVERFOLGUNG MIT ANIMIERTER FIGUR
SYSTÈMES ET PROCÉDÉS DE FIGURE ANIMÉE SUIVANT UN OBJET

(30) Priority: 13.12.2018 US 201862779373 P; 06.02.2019 US 201916269471
(43) Date of publication of application: 20.10.2021
(73) Proprietor: Universal City Studios LLC, Universal City, CA 91608 (US)
(72) Inventor: CHURCHILL, David Michael, Universal City, Florida 91608 (US); VAMOS, Clarisse, Universal City, Florida 91608 (US); BARDT, Jeffrey A., Universal City, Florida 91608 (US)
(74) Representative: Ahmad, Sheikh Shakeel
(86) International application number: PCT/US2019/066068
(87) International publication number: WO 2020/123863

(56) References cited:
- WO-A1-2012/175703
- US-A- 6 070 269
- US-A1- 2011 306 396

## Description

### BACKGROUND

The present disclosure relates generally to the field of amusement parks. More specifically, embodiments of the present disclosure relate to systems and methods utilized to trigger animated figure actions to provide amusement park experiences.

Amusement parks and other entertainment venues contain, among many other attractions, video displays that may provide supplemental content and/or that enhance an immersive experiences for park guests. For example, such displays may include content delivered by animated and/or live-action characters and that relates to the ride or environment. While such pre-recorded content may be scripted to appear as if the characters are interacting with a live audience, e.g., the characters may say hello or ask questions and pause as if waiting for an audience answer, the scripted content does not provide for dynamic or one-on-one audience interactions with a character.

WO 2012/175703 A1 describes a method for generating control signals particularly based on a movement or a pose of a at least one viewer comprising detecting a plurality of images of a scene illuminated by ambient light and the light generated by the display device, wherein each of the plurality of images comprise a substantially constant amount of ambient light and a pre-determined amount of light generated by the display device and wherein the pre-determined amount of light varies between at least two consecutive images of the plurality of images, separating display generated light from the ambient light by using known indicia of the display device generated light to extract only a portion of the illuminated scene, and generating a control signal in response to the extracted portion US 6070269 A describes data-suits for real-time computer animation of cartoon and virtual-reality characters. The data-suits have a number of sensors providing time-varying positional data from a human actor. US 2011/306396 A1 describes methods, apparatuses, programs, and systems for scoring a player performance comprising one or more poses in a dance-based video game. A performance 3D skeleton is received that indicates a pose of the player. A score is calculated by comparing a position, a timing, or both, associated with one or more joints of the performance 3D skeleton to a position, a timing, or both, associated with one or more joints of a target pose and altering one or more characteristics of the dance-based video game based on the score.

### SUMMARY

The invention is defined by the appended set of claims which provide for an animation system comprising an animated figure, a plurality of sensors and an animation controller, and a method of operation. Certain embodiments commensurate in scope with the originally claimed subject matter are summarized below. These embodiments are not intended to limit the scope of the disclosure, but rather these embodiments are intended only to provide a brief summary of certain disclosed embodiments. Indeed, the present disclosure may encompass a variety of forms that may be similar to or different from the embodiments set forth below.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 is a schematic diagram of an amusement park with animated figures, in accordance with an embodiment;
FIG. 2 is a block diagram of an animated figure system including the animated figure and an animation controller, in accordance with an embodiment, in accordance with an embodiment;
FIG. 3 is a block diagram of the animated figure executing an animation in response to a particular shiny object detected, in accordance with an embodiment; and
FIG. 4 is a process flow diagram of executing an animation in the animation figure, in accordance with an embodiment.

### DETAILED DESCRIPTION

One or more specific embodiments of the present disclosure will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional embodiments that also incorporate the recited features.

The present techniques relate to dynamic interaction between an individual, e.g., an amusement park guest, and an animated figure, character, or object. An animated figure may be provided as a plurality of images displayed on one or more display surfaces or as an animated figure or robotic figure. The animation and/or animation sequence may further refer to generating (e.g., via display or physical movement) of facial and/or body movements by the animated figure that are recognizable as an act in response to guest presence and/or actions. In certain embodiments, the techniques facilitate identification of particular objects, such as shiny objects, detected as being worn by or positioned on a guest and that cause a response by the animated figure. In one embodiment, the animated figure may respond to the presence of a detected worn object by appearing to make eye contact, smiling, speaking, running, waving, etc. In certain embodiments, the objects may be shiny objects, e.g., formed from reflective materials that are shiny, reflective, or metallic, including objects found on a person, such as, but not limited to, rings, clothing, necklaces, knives, keys, watches,

Typical guest interactions with an animated figure at an amusement park may be limited to a set of pre-recorded animations for any given interaction. For example, regardless of the guest, gestures made by guests, and/or unique features of the guests, such as their clothing or appearance, the animation provided by the animated figure may be the same. Thus, such interactions may not be perceived as responsive or personalized to the individual guest.

Provided herein are techniques that facilitate interactions between guests and animated figures that appear to be customized and personal. For example, responsive animations may be provided when items worn on the guests are identified, and an animated figure reacts to or responds to such objects. Generally, items guests wear may include one or more shiny objects on the body. For example, guests may wear rings, bracelets, keys, sunglasses, sequence clothing, belts, etc. One or more of these items may be detected by the system, e.g., by a reflection detector. Thus, animations may be customized to animate in response to a particular shiny object worn or carried by a guest. However, providing precise shiny detection, such as detecting where on the body the shiny object is found, and/or determining the exact nature of the shiny object may be complex. For example, while some metal objects are shiny/reflective, not all metal objects are shiny objects. In addition, not all shiny objects are metal or have high metal content. Other types of objects, such as reflective plastics or glass, can be considered shiny.

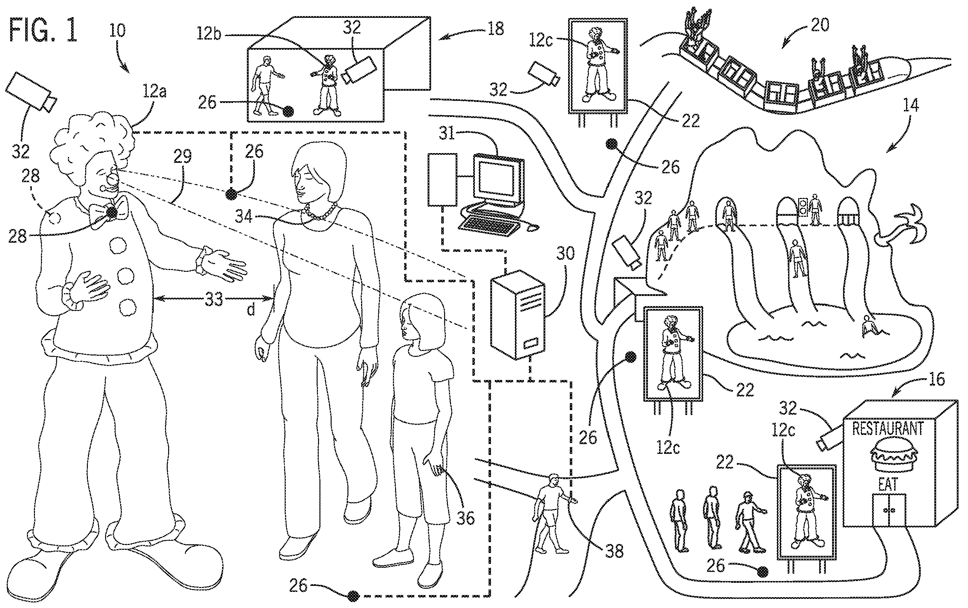

With the foregoing in mind, FIG. 1 is a schematic representation of an amusement park 10 that may operate in conjunction with the disclosed interactive animation system in accordance with present embodiments. In particular, the amusement park 10 includes one or more animated figures 12 that track and react to a detection of a shiny object on a guest, on or around various amusement park attractions. In the depicted embodiment, the amusement park 10 attractions may include a water attraction 14, a restaurant 16, a virtual game room 18, and a track-based ride 20. Different embodiments of the animated figure 12 may be found throughout the amusement park 10, and each of them detects and tracks shiny objects and/or guests (e.g., guest gestures), and react in a manner that the guests perceive as a response to the detected object or guests. For example, the water attraction 14, restaurant 16, and a track-based ride 20 may include display screens 22 that display images of an animated figure 12. The screens 22 may depict an animated figure 12 that reacts to guests and/or a specific shiny object detected. Similarly, an animated figure 12 may also be a virtual embodiment or hologram in a virtual game experienced in the virtual gaming room 18.

It should be noted that although examples provided herein may describe a physical or robotic animated figure 12, the approaches disclosed may be used in other animations, such as displayed, virtual, or holographic animated figures, as described above. Accordingly, as provided herein, the disclosed animation or animation sequence may refer to animation rendered on a display or holographic figure or animation caused by physical movement of a robotic figure. Thus, the present examples should be understood to merely reflect a real-world example of an animated figure in order to provide useful context to facilitate discussion, and should not be viewed as limiting the applicability of the present approach.

As depicted, the animated figures 12 are controlled to react or be animated via an animation controller 30. In one embodiment, the animation controller 30 may be centralized and synced to at least one or more animated figures 12 (e.g., physical animated figure 12a, displayed holographic or virtual animated figure 12b or displayed animated figure 12c via control of displays, e.g., hologram projector or display screens 22) located throughout the amusement park 10. When the animation controller 30 detects guest presence, guest gestures, shiny object, and/or gestures associated with the object, via one or more sensors located on or around the animated figure 12, an animation control signal may be sent to one or more systems controlling the animated figure 12. The communications (e.g., sensed data indicating guest and/or shiny objects) may also be sent to a monitoring system 31. The monitoring system 31 may be an administrative system that not only monitors the animation changes, such as animations sent from the animation controller 30 in response to shiny objects detected and tracked, but may also control or reconfigure the animation controller 30. In this manner, the monitoring system 31 may reset animation options or override automated animations determined by the animation controller 30. For example, the animation controller 30 may automatically send an animation to the animated figure 12 in response to detection of a particular shiny object. Similarly, an operator may manually stop an animation via a stopping mechanism (e.g., button) to override the animation if the operator finds any issues with the animated figure 12 beyond those determined by the animation controller 30. The monitoring system 31 may also be used to recalibrate sensors on or around the animated figure 12. In certain embodiments, the monitoring system 31 and the animation controller 30 may be implemented as a single controller.

As previously mentioned, the animation controller 30 utilizes a combination of sensor data received by sensors on or near the animated figure 12 to detect a shiny object and in response, control animation based on the detected shiny object. As shown, shiny object detectors 26 may be used as a sensor mechanism to detect the presence of a shiny object, which may indicate a shiny object on a guest. The shiny object detectors 26 (e.g., reflectivity sensors, metal object detectors, shiny object detectors, metal sensors) generate shiny object detection data. Although shiny object detectors 26 are shown and discussed herein to detect reflectivity of a material and/or object, the shiny object detectors 26 may include detection of any shiny object, reflective object, metal object, metallic material, including but not limited to, shiny or metal objects, such as gemstones, glass, sequences, rings, necklaces, knives, keys, sunglasses, watches, etc. The shiny object detectors 26, e.g., reflectivity sensors may assess a reflectivity of a material using optical sensors and, based on the reflectivity, determine that the object is shiny. Furthermore, the shiny object detectors 26 may include one or more optical, magnetic, infrared, or inductive metal detectors. Further, the shiny object detectors may be reflectivity sensors configured to assess a reflectivity of a material using optical sensors and, based on the reflectivity, determine that the object is shiny and likely to be a shiny object of interest. Certain types of shiny objects that are worn objects (e.g., jewelry) may be of more interest than others (e.g., bright white teeth). To differentiate between the reflectiveness of white teeth and jewelry, additional analysis (e.g., using camera data) may be used to estimate that the location of a shiny object on a finger, ear, neck, or wrist is likely to be a shiny object of interest, while a location on or in a mouth is less likely. While an approach weighting certain body locations may fail to capture individuals with metal braces, such an approach enriches the identified shiny objects for the types of object of interest (e.g., worn objects).

In one embodiment, a reflectivity sensor is an optical sensor configured to measure intensity of light reflected from a surface of the object of interest. The reflectivity sensor may be integrated with one or more cameras 32 such that camera image data is used as an input to determine if captured objects are reflective. The assessment may be performed on a pixel-by-pixel basis, such that reflectivity of an individual pixel is assessed. If a sufficient number of adjacent pixels identified as being from an individual object (e.g., having similar color properties, located at a likely object location, or within a predefined boundary) are above the reflectivity factor threshold, the object is categorized as shiny. In one embodiment, specular or diffuse reflective properties may be assessed. Diffuse reflectivity may be observed over a larger percentage of a surface area of an object, while specular reflectivity may be observed at a fixed range of angles depending on image capture position and a position of available light sources. A shiny object may include both types of reflective properties. Accordingly, the camera data may be used to identify small shiny regions of high reflectivity (specular reflection) within an object or that swamp other types of reflectivity (e.g., a flashing diamond appearing as a bright halo in a camera image). Because individuals are moving within the environment, camera data over a time window may be used to track specular reflectivity at isolated moments to identify a shiny object, even if the camera data is indicative of diminished reflectivity as the individual, and their worn object, moves away from the specular reflective angle. The controller may identify temporarily or intermittently shiny objects as being shiny objects if estimated reflection at one point in a time window is above a threshold, even in the context of lower reflectivity at adjacent time points.

Moreover, the shiny object detectors 26 may be placed on or around an animated figure 12 of an attraction at a predetermined proximity from the animated figure 12, such that the animation controller 30 may gauge signal strength. Thus, when a shiny object is detected within the proximity, the shiny object detectors 26 may transmit a signal pulse detectable by the animation controller 30. The signal may be generated in a manner that may allow the animation controller 30 to determine an accurate detection of a shiny object. Furthermore, the shiny object detectors 26 may allow detectability for moving objects. Thus, the signal may indicate that the shiny object detected may be on a guest. In this manner, stationary shiny objects (e.g., stationary rides made of metal) of amusement park 10, such as attractions 16, 14, 18, and 20, that may be near the animated figure 12 may not be detected to falsely indicate a shiny object of interest.

In some implementations, the shiny object detector 26 may be sensitive to different types of shiny objects. For example, the shiny object detector 26 may be an optical or photoelectric sensor that may determine a shiny object based on a user defined threshold for reflectivity of the object. In general, whenever light travels through a material or medium, part of the light is reflected from the surface, e.g., as described by a reflection percentage, and the remainder of the light is refracted. Thus, reflectivity may be measured by a reflection factor % or refractive index. The refractive index references a dimensionless number to describe how fast light propagates through material. It also determines how much a path of light is bent (e.g., refracted) when entering the material.

In some embodiments, the threshold for determining a shiny object may be based on the amount of light reflected or the reflection factor. By way of example, the amount of light reflected when passing through a non-shiny object, such as sandstone material, is 20-40% while the reflection factor of polished aluminum is 80-87%. Thus, in one embodiment, the threshold for reflectivity may be a reflection factor of at least 80% when light passes through the particular object. In another embodiment, the threshold may be a reflection factor of at least 70%, such that at least 70% of light is reflected from the object. Furthermore, in other embodiments, the threshold for determining a shiny object may be based on a range of light reflected, such as a reflection factor of 70%-100%.

Additionally or alternatively, the threshold may be based on the refractive index rather than the reflection factor or amount of light reflected. By way of example, the refractive index for aluminum is 1.373, such that light travels 1.373 times faster in vacuum than through metal. The refractive index for other shiny objects, such as but not limited to, silver is 0.266 and a diamond is 2.417. Accordingly, a shiny object determination may be made by the shiny object detector 26 based on a refractive index of the object of at least 0.2 or a range of 0.2-2.5. Some shiny objects, such as silver metal objects, may be significantly more refractive than the others, such as diamonds. Accordingly, determining a particular threshold for reflectivity based on either a reflection factor percentage or a refractive index may be difficult. Moreover, non-shiny objects that may not be of interest may also fall within the reflection factor % or refraction index threshold. For example, snow has a reflection factor of 80%, which may be categorized as shiny based on the threshold in some embodiments, causing inaccurate shiny object determinations. Furthermore, the amount of light reflected by an object and how it is reflected may be dependent upon the degrees of smoothness or texture of the surface of the object. For example, when imperfections are smaller than wavelength of the incident light, virtually all the light is reflected equally. To account for the varying materials and textures of shiny objects, along with the varying reflectivity of shiny objects, a shiny object may be determined using additional sensor methods as described herein, such as by mental sensors, cameras, etc.

For example, the shiny object detector 26 may include a metal detector to determine a shiny object, such as a very low frequency (VLF) detector or a pulse induction (PI) detector, or the like. The VLF detector may transmit an electrical current producing a magnetic field under and/or below a surface, and receive signals that interfere with the magnetic field. Depending on the type of metal, such as highly magnetic objects (e.g., steel or iron) or low magnetic objects (e.g., gold), the magnetic pulse interference may change to indicate type of metal detected. In another example, a PI detector may pulse current through a coil of wire to generate a brief magnetic field with each pulse and cause another current, a reflected pulse, to run through the coil. The reflected pulse is short (e.g., 30 microseconds). If a metal object is detected, the pulse creates an opposite magnetic field in the object, causing the reflected pulse or causing it to last for a longer duration, indicating a metal detected. Thus, the animation controller 30 may interpret the pulse signals for a specific class or category of metal objects, and thus, a shiny object. For example, necklaces, rings, and bracelets detected may belong to a classification group of jewelry that may be of interest when determining an appropriate animation. The characteristics that the metal detector may use to determine classification may include, but are not limited to, the amount of metal typically used for body jewelry, type of metal (e.g., gold), etc.

As depicted, the shiny object detectors 26 may be used to detect shiny objects on a guest wearing a necklace 34 and a child wearing a small ring 36. Thus, the animation controller 30 may send a signal for the animated figure 12 to react in a manner indicating the detection of jewelry, for example, by changing its facial expression to indicate that it is in awe of the jewelry (e.g., pointing to the detected jewelry, enlarged eyes, and excited smile). Although shiny object detectors 26 may be used to detect shiny objects and/or classification of a shiny object, it may be difficult to precisely classify the shiny object and/or track the location of the object on the guest. Continuing with the example with the child wearing a small metal ring 36, detecting a small shiny object may be especially difficult. Thus, determining a classification for a shiny object and/or tracking it on a guest to accurately animate the animated figure 12 may be difficult with the use of a reflectivity or metal sensors or detectors, such as shiny object detectors 26.

Accordingly, other sensor mechanisms may be used in combination with sensors configured to provide shiny detection data, i.e., the reflectivity sensors or metal detectors, such as a camera 32 or a series of cameras 32 that may be installed around the animated figure 12 and/or around the amusement park 10. The cameras 32 may be set up at a predetermined distance from the animated figure 12. The predetermined distance may be a distance that may allow a full view of a guest body image and areas that the guest may wear shiny objects. For example, the camera 32 may view a 20 ft. (e.g., 6 meter) circumference around the animated figure 12. In this manner, any guests near the animated figure 12 that may trigger an animation may be easily detected. Additionally or alternatively, the cameras 32 may be integrated into the body of the animated figure 12. The integration may be positioned such that there is a clear view of guests and/or shiny objects to be perceived, whether the guests are stationed in front of or behind the animated figure 12. For example, integrating a camera 32 in the eyes of the animated figure 12 may allow for detection of guests interacting in front of the animated figure 12.

The cameras 32 may also be used to capture data used as inputs to one or more processes of the system as provided herein. In one example, the camera 32 data may be used by the animation controller 30 to detect human presence. That is, the presence of a captured image of a person is used at least in part to trigger an animation. In another example, the camera data may be processed to identify a guest using skeletal tracking, facial recognition, and/or body recognition. The guest detection and/or facial recognition may also allow a triggering of other sensor mechanisms to subsequently detect shiny objects on the guest. For example, after detecting a face, and thus a guest, the camera 32 may initialize the shiny object detector 26 to report on or send an input of shiny object detected near the guest, which may then allow for the animated figure to track the shiny object and/or guest and provide a responsive animation. The skeletal tracking may include using real-time or captured images of guests by the cameras 32, and comparing the images to recognized skeletal models to indicate a human skeleton detection. For example, the skeletal model may include relative positioning of essential joints, bones, and limbs of a human skeleton. Thus, comparing captured images of guests and the skeletal model may allow for human face and body detection. The skeletal tracking data may be further processed to precisely identify a face or body using facial recognition and body recognition, and may also be used to identify shiny objects on preferred body parts or regions. The facial image detection may consider multiple facial features as a whole to determine that a face has been accurately detected. The features considered may be points of facial interest and their intersection (e.g., two eyes aligned along a horizontal line in close proximity to a nose along a vertical line, detected at or near a point between each eye). Furthermore, the cameras 32 may be used for full body detection, such that body features may be used to precisely identify a guest, and subsequently trigger detection of shiny objects. For example, the body detection features may consider body features and their intersection, such as face, arms, and legs. Moreover, the cameras 32 may be used for thermal recognition to detect body-heat, which may be used to further accurately predict the presence of a guest. Furthermore, the camera 32 may also include infrared (IR) capabilities, such that the camera may provide night vision, thereby detecting guests and/or objects via shape recognition (as discussed below) in both the day and night.

Additionally or alternatively, the camera 32 may be used for shape recognition to identify shiny objects of interest. The cameras 32 may be configured to specifically detect common pieces of shiny objects found on a guest. The shapes recognized may be circular rings, circular necklaces, belt buckles, key shapes, etc. The cameras 32 may be configured to perform the skeletal tracking, facial/body recognition, and shape recognition in sequence to allow for an accurate identification of a shiny object found on a guest. For example, after detecting a guest via facial/body recognition or body-heat recognition, the animated figure system may determine a body image and subsequently apply shape recognition to specific body areas that are considered to be likely to have a shiny object of interest. For example, a search for metal objects may be limited to the identified waist region for belts, identified hands or toes for rings, identified neck or face for necklace shapes, etc. Further, additional verification of detected metal may also incorporate camera data. If a shiny object is detected at an identified guest hand, camera data indicating an annular shape corresponding to the potential shiny object is indicative of a ring. Furthermore, in some implementations, the cameras 32 may also capture movements (e.g., gestures) of the guest and use those captured movements to further simulate an animation for the animated figure 12. Thus, the shiny objects detected may also be used to precisely detect and track a guest rather than providing an animation that may be perceived as a response to the shiny object itself.

Moreover, one or more additional sensors 28, e.g., proximity sensors, thermal sensors, optical sensors, may also be used to detect human presence. The additional sensors 28 may be installed on the physical body of a robotic or animated figure 12a or integrated near, into, or on the display screen 22 displaying the animated figure 12c. In this manner, if a guest touches the animated figure, the animation controller 30 may animate the animated figure 12 to react accordingly. For example, if a guest touches the back shoulder of the animated figure 12, the animated figure may be instructed to react as if it is afraid, such as by running away from the guest. The additional sensors 28 may also be used in conjunction with other sensor mechanisms, such as the cameras 32 or shiny object detectors 26, to trigger detection of a shiny object. Thus, based on the detection of guest presence detected by the thermal sensors, the cameras 32 may initiate a thermal imaging and shape recognition to detect shiny objects on guests. In certain embodiments, the additional sensors 28 may detect if the guest is within range of the animated figure 12. That is, if a sensed distance 33 is less than a threshold and/or if the guest is within a hypothetical field of view 29 of the animated figure 12, the animation may be triggered.

Other sensor mechanisms may include radio frequency identification (RFID) tags 38 incorporated into guest wearable devices (e.g., bracelets). The RFID tags 38 may communicate with an electronic reader incorporated into an attraction and/or around an animated figure 12 to indicate presence of the tag. The RFID data may be utilized to indicate a presence of the guest, such as to trigger shiny object recognition to detect and track a metal object.

It should be understood that the animated figure 12 may be at rest or operating under default instructions in the absence of the guest. For example, the displayed animated figure 12c may be active on the display screen 22. The animated figure 12 may be generally looking around for guests or performing other tasks until an interactive animation is triggered based on detection of the guest and concurrent detection of a metal object on or near the guest.

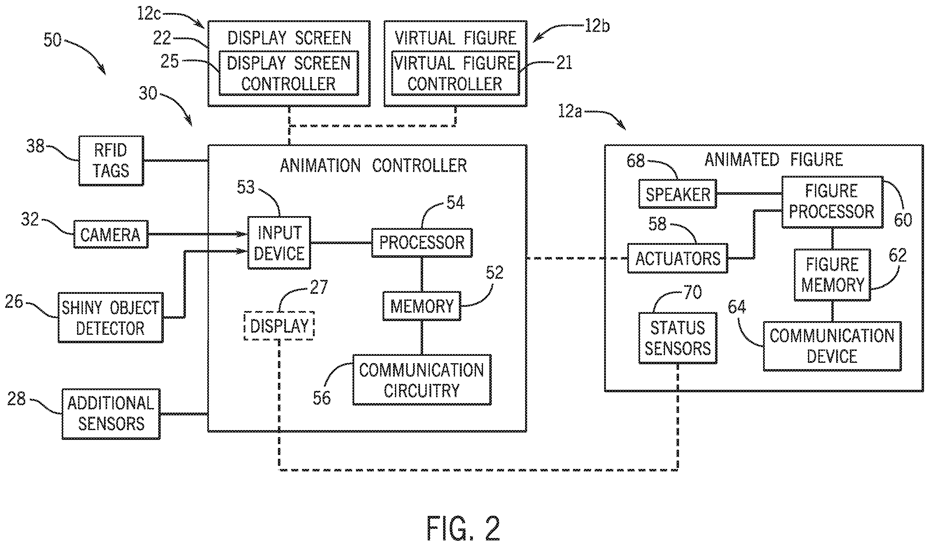

As previously mentioned, the combination of detected sensor signal indicative of detection of guest presence and/or shiny objects may be sent to an animation controller 30, which may then determine a corresponding animation sequence. To illustrate, FIG. 2 shows a block diagram of an animated figure system 50 with an animation controller 30 and an animated figure 12 (e.g., animated figure 12a, virtual animated figure 12b, and/or displayed animated figure 12c). The animation controller 30 (e.g., electronic controller) may include a memory 52, a processor 54, communication circuitry 56, and an input device 53. In certain embodiments, the memory 52 is configured to store instructions, data, and/or information, such as a library of animations (e.g., database or selectable available animation options). Additionally or alternatively, the memory 52 may include a user-defined algorithm for a responsive animation. For example, the algorithm may include tracking the detected shiny object using the animated figure 12 features, such as eyes. Thus, the algorithm may cause the eyes of the animated figure 12 to track and follow the detected shiny object. It should be noted that although examples provided herein may describe the animation library, the approaches disclosed may use other animations or algorithms, or both, such as algorithms that cause the animated figure 12 to track and react (e.g., follow) the shiny object rather than selecting animations from a stored library, such that the animation may be perceived as responsive to the tracked shiny object. Additionally or alternatively, the algorithm may track a shiny object as means to track a guest, and then provide animations that may be responsive to the guest and/or guest gestures. Furthermore, although examples provided herein describe the animated figure 12 as an animated figure 12a, the approaches disclosed may use other animated figures, such as but not limited to, a displayed virtual animated figure 12b, a displayed animated figure 12c, or the like.

As discussed in more detail below, in certain embodiments, the processor 54 is configured to receive input signals, from the input device 53, relating to detecting guests, and/or shiny objects, and/or guest gestures from one or more sensors previously described, to select an animation from the library of animations based on the received inputs, and subsequently provide control signals to a speaker 68, and/or an actuator 58 of the animated figure 12, based on the received inputs and/or in accordance with the selected animation. In this manner, the animation controller 30 may control the animations of the animated figure 12. The sensor data may be provided to the input device 53 by the camera 32, the shiny object detectors 26, additional sensors 28 (e.g., proximity sensors or thermal sensors), and/or RFID tags 38, as previously described. It should be understood that the illustrated system is merely intended to be exemplary, and that certain features and components may be omitted and various other features and components may be added to facilitate performance, in accordance with the disclosed embodiments.

After receiving the sensor data via the input device 53, the animation controller 30 may facilitate control of the animated figure 12 using the processor 54 to select an animation from the library of animations that may be stored in the memory 52, based on the sensor data. The animation library may include, for example, a list of available animations, such as a first animation option (e.g., smile), a second animation option (e.g., say greeting), a third animation option (e.g. laugh and wave), a fourth animation option (e.g., say goodbye), etc. In certain embodiments, the animation options may be stored in the memory 52. In some implementations, the processor 54 may be configured to select one or more animations to be performed in sequence (e.g., animation sequence).

In certain embodiments, the animation controller 30 may be used to control the various components of the animated figure 12 and it should be understood that any of the features, functions, and/or techniques disclosed herein may be distributed between the animated figure 12 and the animation controller 30 in any suitable manner, such as the animation controller 30 and the animated figure 12 may be integrated into the animated figure 12. In the depicted embodiment, the processor 54 of the animation controller 30 may execute instructions stored in the memory 52 to perform operations, such as selecting an animation (e.g. smile, speak, point to shiny object, run away from shiny object, etc.) to execute on the animated figure 12. As such, in some embodiments, the processor 54 may be one or more general purpose microprocessors, one or more application specific processors (ASICs), one or more field programmable gate arrays (FPGAs), or any combination thereof. Additionally, the memory 52 may be a tangible, non-transitory, computer-readable medium that stores instructions executable by and data to be processed by the processor 54. Thus, in some embodiments, the memory 52 may include random access memory (RAM), read only memory (ROM), rewritable non-volatile memory, flash memory, hard drives, optical discs, and the like.

Furthermore, the animation controller 30 may enable the communication circuitry 56 to interface with various other electronic devices, such as the components illustrated in the animated figure 12. For example, the communication circuitry 56 may allow the animation controller 30 to communicatively couple to a network, such as a personal area network (PAN), a local area network (LAN), and/or a wide area network (WAN). Accordingly, in some embodiments, the animation controller 30 may process data from the input device 53 and communicate it to the animated figure 12 (e.g., animated figure 12a) via the communication circuitry 56. For example, after processing sensor data inputs from the input device 53, the processor 54 may enable the communication circuitry 56 to wirelessly transmit data to the animated figure 12 to enable its face or body to output one or more animations (e.g. smile, speak, point to metal object, run away from metal object, etc.). Additionally or alternatively, the processor 54 may enable the communication circuitry 56 to wirelessly transmit data to a virtual figure controller 21 of the virtual animated figure 12b to execute animations. Similarly, the sensor data may be wirelessly transmitted to a display screen controller 25 of the display screen 22 to control a displayed animated figure 12c. Although not explicitly shown, the display screen controller 25 and the virtual figure controller 21 may each include a memory similar to a figure memory 62 of the animated figure 12a to store animations or algorithms for performing animations and a processor similar to a figure processor 60 of the animated figure 12a to process and execute the animations on the respective animated figures 12b, 12c. In further configurations, the communication circuitry 56 may be wirelessly connected, or may be connected via a wired connection, to the animated figure 12.

In some implementations, the animation controller 30 may also be configured to display an indication of available animations (e.g., a list of animations or algorithms stored in the library in the memory 52), as well as an indication of the selected movements, features, and/or animation on a display 27 (e.g., a display of text, images, graphics, or the like) of the animation controller 30 for visualization purposes. The display may also be available to the monitoring system 31 (see FIG. 1) for monitoring or making administrative changes to the animation controller 30 and/or the animated figure 12. Thus, an operator monitoring the monitoring system 31 may view the display 27 to have a visual indication of possible animations, and may subsequently modify the possible options, such as by expanding the animation option library to improve the interaction of the animated figure 12 with guests. Moreover, using the display 27, the operator may override and assign one or more available animations to one or more sensed guest interactions and/or shiny objects. Thus, in some embodiments, the multiple animations provided on the display 27 may be changed, modified, switched, delayed, or deleted by the operator, thereby enabling updated animations. In some embodiments, the processor 54 may be configured to instruct the display 27 to display a list of previously performed animations corresponding to sensor data to facilitate visualization and to facilitate selection of future animations.

The display 27 may be further utilized to provide various other information. For example, in some embodiments, the camera 32 may communicate with the display 27 to show images (e.g., still or real-time images, such as video) of guests and currently implemented animation (e.g., current movements of the animated figure 12), which may have been communicated to the animated figure 12 by the communication circuitry 56. Furthermore, the displayed images may be used by the operator to modify the animation library.

Once the animation signal is sent from the animation controller 30 to the animated figure 12 (or the display screen 22 displaying the animated figure 12), the animated figure 12 implements the corresponding animation. As shown, the components used to implement the animation in the animated figure 12 may include the actuators 58, the figure processor 60, the figure memory 62, the communication device 64, and the speaker 68. The figure processor 60 may receive an animation signal from the animation controller 30, and the figure processor 60 may process the signal to provide instructions to modify the actuators 58, and/or speakers 68 accordingly. The figure processor 60 may execute instructions stored in the figure memory 62 to perform operations received from the animation controller 30, such as determining the complete motion profile (e.g., animations) to execute on the animated figure 12. As such, in some embodiments, the animated figure 12 may include one or more general purpose microprocessors, one or more application specific processors (ASICs), one or more field programmable gate arrays (FPGAs), or any combination thereof. Additionally, the figure memory 62 may be a tangible, non-transitory, computer-readable medium that stores instructions executable by, and data to be processed by, the figure processor 60. Thus, in some embodiments, the figure memory 62 may include random access memory (RAM), read only memory (ROM), rewritable non-volatile memory, flash memory, hard drives, optical discs, and the like.

The actuators 58 may be any suitable actuators, such as electromechanical actuators (e.g., linear actuator, rotary actuator, etc.). The actuators 58 may be located inside the animated figure 12 and be configured to adjust certain features or portions of the animated figure 12 (e.g., the eyes, eyebrows, cheeks, mouth, lips, ears, arms, legs, or the like). For example, a rotary actuator may be positioned inside the animated figure 12 along the outer cusps of the lips of the animated figure 12 to cause the face of the animated figure 12 to smile in response to a control signal (e.g., from the figure processor 60). As a further example, the animated figure 12 may contain an electric linear actuator that drives the position of the eyebrows (e.g., to frown) of the animated figure 12 in response to a control signal. Similar actuators may be used to provide other body feature movements, such as to move the legs or arms of the animated figure 12. In some embodiments, the actuators 58 may enable the animated figure 12 to provide any of a variety of projected facial or body feature gestures, physically animated facial or body gestures, or combinations thereof. Furthermore, the speaker 68 may project pre-recorded phrases as an animation option in the animation library.

In certain embodiments, the animated figure 12 may include one or more status sensors 70 configured to monitor a component status and/or an animated figure 12 status (e.g., to determine whether a performed animation does not correspond to the selected animation), and an indication of the status may be displayed on the display 27 of the animation controller 30. For example, a status sensor 70 may be associated with each actuator 58 and configured to detect a position and/or movement of the actuator 58, which may be indicative of whether the actuator 58 is functioning properly (e.g., moving in an expected way based on the selected animation). In certain embodiments, the animation system may be configured to provide an indication of a component failure, a current animation selection, an upcoming animation selection, a currently playing animation, or the like, via the display 27.

Furthermore, the communication device 64 may enable the animated figure 12 to interface with various other electronic devices, such as the components of the animation controller 30. For example, the communication device 64 may enable the animated figure 12 to communicatively couple to a network, such as a personal area network (PAN), a local area network (LAN), and/or a wide area network (WAN). In further embodiments, the animated figure 12 may be communicatively coupled via a wired (e.g., land line) connection to the various components of the animated figure 12 and/or the animation controller 30. Accordingly, in some embodiments, the figure processor 60 may process the data received by the communication device 64 in response to the input data received by the input device 53 of the animation controller 30, and transmitted to the animated figure 12 via the communication circuitry 56. For example, the animation controller 30 may be configured to automatically, wirelessly transmit the animation signal after determining an appropriate animation. Additionally or alternatively, an operator monitoring the monitoring system 31 (see FIG. 1) may select one or more buttons that may also wirelessly transmit animation data.

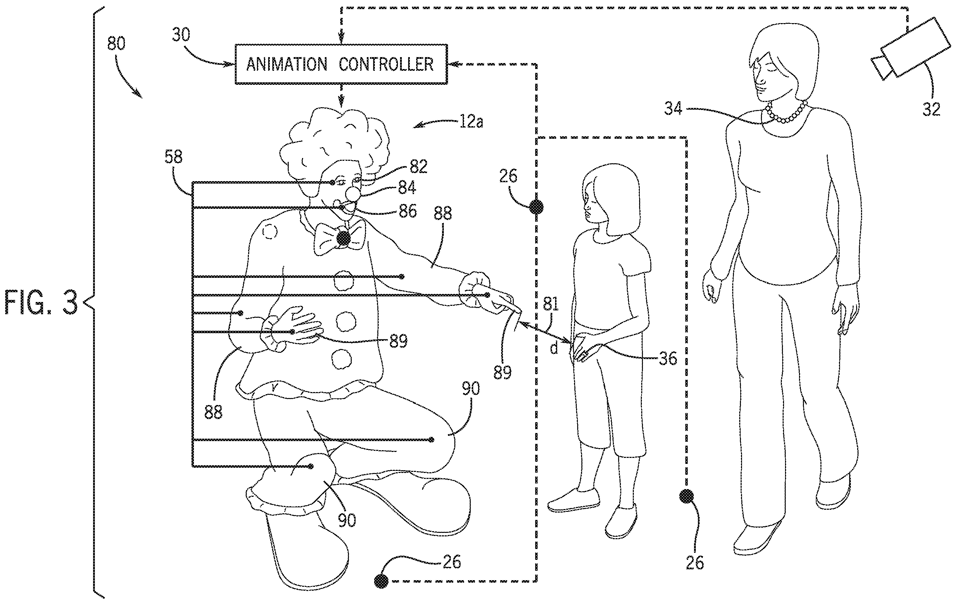

FIG. 3 is a schematic diagram 80 of an embodiment of the animated figure 12, shown as an animated figure 12a, performing an animation, in accordance with aspects of the present disclosure. The depicted embodiment may include the animated figure 12 interacting with guests wearing shiny objects. As shown, the camera 32 is positioned to view both the animated figure 12 and guests who may come within a predetermined distance or range 81 from the animated figure 12 (e.g., as estimated by a proximity sensor or the camera 32) that triggers animation. Shiny object detectors 26 are positioned to detect shiny objects that may come within a range that may also trigger animation. The sensed data provided by the camera 32 and shiny object detectors 26 may be communicated to the animation controller 30. Specifically, the animation controller 30 may calculate a two- dimension (2D) XY-plane map using sensor data input, such that the animated figure 12 is animated for guests detected within the predetermined range 81 of the animated figure 12 on the XY-plane range. For example, the map may include a view of the animated figure 12 and predetermined range 81, such that the animated figure 12 is the point of origin and any guests detected are determined to be at X distance (horizontal distance) and Y distance (vertical distance) from the animated figure 12. The XY-plane may include four quadrants so that the guest may be detected at a negative distance (below or behind) the animated figure 12 on the XY-plane but that are still within the predetermined range 81. The animation controller 30 may use the XY-plane data to estimate guest location relative to the animated figure 12 based on sensor data (e.g., proximity sensor) rather than focusing on or tracking guests using the fixed camera 32. The estimation may be used to trigger animations in the animated figure 12.

Continuing with the example of a guest wearing a necklace 34 and a child wearing a ring 36 as described in FIG. 1, the two guests may be within the predetermined range 81 to trigger animation. Since both guests are wearing shiny objects and are within range 81 to be detected, the animated figure 12 may be instructed (e.g., via a user defined algorithm stored in the memory 52) by the animation controller 30 to track and react to the guest closest in proximity to the animated figure 12. In other embodiments, if the guest is wearing multiple shiny objects, the animated figure may be instructed to react to the first detected shiny object and/or stronger shiny signals (e.g., stronger metal detection or higher reflectivity). Additionally or alternatively, if there are multiple shiny objects within the predetermined range 81, the animated figure may remap its tracking and corresponding animations to the next strongest shiny object signal producing object within the range 81 after a predetermined time period of tracking a guest.

In this example, the child is in closer proximity to the shiny object detector 26 located by the animated figure 12, and thus, the animated figure may react to the shiny object found on the child's body and may disregard shiny objects detected on other guests. Using different recognition techniques, such as, but not limited to, metal detection classification or shape recognition, as previously discussed, the animation controller 30 may determine that the shiny object worn is a ring 36. In some embodiments, the animated figure 12 may be a character that is fascinated by jewelry. Thus, the animation controller 30 may look up the corresponding animation or animations in the animation library and send the signal through communication circuitry 56. Here, a detection of jewelry may correspond to an animation causing the animated figure 12 to track and point towards the identified piece of jewelry and show a surprised expression. Additionally or alternatively, the animation instructions may also include leveling the animated figure 12 with the detected guest and/or shiny object. Thus, animated figure 12 may be designed with moveable features to support the various animations, such as eyes 82, a nose 84, a mouth 86, arms 88, fingers 89, and legs 90. The features may be actuated via the respective actuators 58 in the animated figure 12 based on a control signal (e.g., received from the processor 54 of the animation controller 30). As discussed above, the speaker 68 may also be enabled to project words and/or phrases to interact with a guest as part of an animation.

Thus, in the current example, the legs 90 may be actuated to bend down and have the animated figure 12 become leveled in height with the child, and the arms 88 and fingers 89 may be actuated to continue tracking and pointing towards the ring 36. Furthermore, the eyes 82 may be actuated to become larger, and the mouth 86 may be actuated to open and become circular. Thus, the animated figure 12 features may be actuated to execute the animation selected from the animated library. As previously mentioned, rather than selecting an animation from an animation library, an algorithm may be executed that may cause the animated figure 12 to fixate on the detected shiny object and to track the shiny object in a recognizable manner, such as using its eyes to track the ring 36. If the guest moves out of the range of detection, the animated figure 12 may be instructed to move back to its initial position, and the moveable features may be actuated accordingly. In this manner, the animated figure 12 may interact with a guest based on the tracked guest and/or the tracked shiny object observed on the guest for as long as the shiny object is within the predetermined range 81.

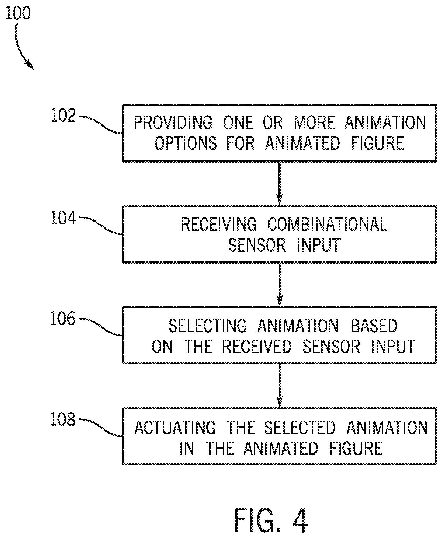

FIG. 4 is a process flow diagram for a method 100 for outputting an animation to the animated figure 12. It should be noted that the method 100 may be performed as an automated procedure by a system, such as the animated figure system 50 having the animated figure 12 and/or the animation controller 30. Although the flow diagram illustrates the steps in a certain sequence, it should be understood that the steps may be performed in any suitable order and certain steps may be carried out simultaneously, where appropriate. Further, certain steps or portions of the method 100 may be omitted and other steps may be added. The method 100 may be carried out in response to a guest and/or shiny objects detected by sensor data input (e.g., via the camera 32, shiny object detector 26, additional sensors 28, and/or the RFID tags 38), or the like.

As illustrated, the method 100 generally includes providing one or more available animation options within the animated figure 12 (block 102), receiving sensor input (block 104), selecting a corresponding animation based on the received sensor input (block 106), and actuating the selected animation in the animated figure 12 (block 104).

In more detail, the method 100 may provide one or more available animation options for the animated figure 12 (block 102). As discussed in detail above, there may be a list of available animation options (e.g., smile, speak, wave, etc.) from an animation library (e.g., stored in the memory 52, which may further be displayed on display 27) that may be executed on the animated figure 12. Moreover, animation options that may be stored in memory 52 but not a library may include tracking a detected shiny object via the features (e.g., move eyes to follow shiny object) of the animated figure 12. Furthermore, the animation option may additionally or alternatively include tracking a guest by using a shiny object on the guest to track. The animation options may be determined automatically via the processor 54 of the animation controller 30. Additionally or alternatively, the animations may be presented to an operator via the display 27. The available animation options of the animation library may be organized as a list displaying each of the available animation options (e.g., a first animation option, such as a smile, a second animation option, such as saying a greeting, a third animation option, such as laughing and waving, etc.), a list of animated figure features associated with the options (e.g., mouth 86 position changes, eyes 82 position changes, arms 88 position changes, etc.), a network displaying the animation options, or any other suitable manner of displaying the animation options and/or facilitating review and/or selection of the animation options. A greater number of animation options associated with multiple sensed inputs may enhance the overall effectiveness of guest interaction with the animated figure 12.

The method 100 receives a combination of sensor inputs (block 104) used to select an animation. The inputs may be sensed data from one or more cameras 32, as discussed above. Thus, the input may include data for body outlines or images of detected guests using facial or body recognition as determined by the animation controller 30 and using data captured by the camera 32. The inputs may also include shiny object detection, which may in turn include data from shiny object detectors 26 (e.g., reflectivity sensors and/or metal detectors), as well as shape recognition using camera data captured from the camera 32, and specifically detecting shiny objects on the body. Furthermore, the sensed input may also include data detected by shiny object detectors 26, additional sensors 28, and/or RFID tags 38. The shiny object detectors 26 may be used to detect shiny objects near the animated figure 12. Thus, the combination of body or face recognition and shiny object detection may be used for sensor input to precisely detect guests and/or location of shiny objects on the guest.

Next, an animation based on the received sensor input (block 106) may be selected. The animation may be sent as an animation signal (e.g., control signal(s)) to be processed by a figure processer 60 of the animated figure 12.

Once the animated figure 12 receives and processes the selected animation from the animation controller 30, the animation is executed by the animated figure 12. Executing the animation on the physical structure of the animated figure 12 may include actuating the animation in the various actuators 58 of the animated figure 12 (process block 108). For example, actuating may cause the animated figure 12 to modify the positioning of its physical features to a frown, a smile, project sounds, follow metal object with eyes, and the like by providing the control signals to the actuators 58. Thus, actuations may cause guests to perceive the animated figure 12 as acting in a manner that is responsive or unique to the guest and/or particular shiny object detected.

The techniques presented and claimed herein are referenced and applied to material objects and concrete examples of a practical nature that demonstrably improve the present technical field and, as such, are not abstract, intangible or purely theoretical.

## Claims

1. An animation system, comprising:
an animated figure (12);
a plurality of sensors (26, 28, 32, 38); and
an animation controller (30) comprising a processor (54) and a memory (52), wherein the memory (52) stores instructions executable by the processor (54), the instructions configured to cause the animation controller (30) to:
receive guest detection data from the plurality of sensors (26, 28, 32, 38), wherein the guest detection data is indicative of a presence of at least one guest within a predetermined range of the animated figure (12);
receive shiny object detection data from the plurality of sensors (26, 28, 32, 38), wherein the shiny object detection data indicates the detection and location of one or more shiny objects (34, 36) which are being worn by the at least one guest and are formed from materials with a reflective surface that are shiny, reflective or metallic;
determine an animation sequence of the animated figure (12) based on the guest detection data and shiny object detection data, and wherein the animation sequence comprises reactive responses in real-time, pre-programmed responses, or a combination thereof, wherein the animated figure reacts to shining objects which are identified to be worn on the at least one guest; and
transmit a control signal indicative of the determined animation sequence to cause the animated figure (12) to execute the determined animation sequence;
wherein the one or more shiny objects (34, 36) comprises one or more of a ring, a bracelet, a key, sunglasses, jewelry, clothing, a necklace, a knife, a watch or a belt, and wherein the animated figure is configured to execute the determined animation sequence indicated by the control signal upon receipt of the control signal.

2. The system of claim 1, wherein the received guest detection data is based on information from one or more cameras (32) of the plurality of sensors (26, 28, 32, 38), and wherein the information is used to identify a skeleton of the at least one guest using skeletal tracking, a face of the at least one guest using facial recognition, body parts of the at least one guest using body recognition, or a combination thereof.

3. The system of claim 2, wherein the animation controller (30) is configured to select the one or more shiny objects (34, 36) detected as being worn from among a plurality of shiny objects identified based on the shiny object detection data by selecting the shiny object closest to the identified face of the at least one guest as determined by the skeletal tracking, facial recognition, or a combination thereof.

4. The system of claim 2, wherein the animation controller (30) is configured to select the shiny object (34, 36) detected as being worn from among a plurality of shiny objects identified based on the shiny object detection data by selecting the shiny object closest to an identified arm or hand of the at least one guest as determined from the skeletal tracking, body recognition, or a combination thereof.

5. The system of claim 1, wherein the shiny object detection data comprises shiny object data from one or more reflectivity sensors, magnetic field, infrared, optical, or inductive metal detection sensors, shape data from one or more cameras (32), or a combination thereof.

6. The system of claim 1, wherein the animation sequence causes the animated figure (12) to turn its head to track the shiny object (34, 36) or react to indicate detection of the shiny object (34, 36).

7. The system of claim 1, wherein the memory (52) stores a plurality of animation sequences, and wherein determining the animation sequence further comprises selecting an individual animation sequence from the plurality of animation sequences.

8. The system of claim 1, wherein the animation sequence stops in response to the guest detection data being indicative that the at least one guest wearing the shiny object (34, 36) is no longer within the predetermined range of the animated figure (12).

9. The system of claim 1, wherein the animation sequence stops after a predetermined time period has elapsed.

10. A method, comprising:
receiving guest detection data from a plurality of sensors (26, 28, 32, 38), wherein the guest detection data is indicative of a presence of at least one guest within a predetermined range of an animated figure;
receiving shiny object detection data from the plurality of sensors (26, 28, 32, 38) configured to detect metal objects or shiny objects (34, 36), wherein the shiny object detection data indicates the detection and location of one or more shiny objects (34, 36) which are being worn by the at least one guest and are formed from materials with a reflective surface that are shiny, reflective or metallic;
determining an animation sequence of the animated figure (12) based on the guest detection data and shiny object detection data, wherein the animation sequence comprises reactive responses in real-time, pre-programmed responses, or a combination thereof, wherein the animated figure reacts to shining objects which are identified to be worn on the at least one guest, the one or more shiny objects (34, 36) comprising one or more of a ring, a bracelet, a key, sunglasses, jewelry, clothing, a necklace, a knife, a watch or a belt; and
transmitting a control signal indicative of the determined animation sequence to cause the animated figure (12) to execute the determined animation sequence;
executing, by the animated figure, the determined animation sequence indicated by the control signal upon receipt of the control signal.

11. The method of claim 10, wherein the received guest detection data is based on information received from one or more cameras (32) of the plurality of sensors (26, 28, 32, 38), and wherein the information is used to identify a skeleton of the at least one guest using skeletal tracking, a face of the at least one guest using facial recognition, body parts of the at least one guest using body recognition, or a combination thereof.

12. The method of claim 11, further comprising selecting the one or more shiny objects (34, 36) detected as being worn from among a plurality of shiny objects identified based on the shiny object detection data by selecting the shiny object closest to the identified face of the at least one guest as determined by the skeletal tracking, the facial recognition, or a combination thereof.

13. The method of claim 10, wherein the shiny object detection data comprises data from one or more reflectivity sensors, magnetic field, infrared, optical, or inductive metal detection sensors, shape data from one or more cameras (32), or a combination thereof.

## Patentansprüche

1. Animationssystem, umfassend:
eine animierte Figur (12);
eine Vielzahl von Sensoren (26, 28, 32, 38); und
eine Animationssteuerungseinheit (30), die einen Prozessor (54) und einen Speicher (52) umfasst, wobei der Speicher (52) Anweisungen speichert, die durch den Prozessor (54) ausführbar sind, wobei die Anweisungen dazu konfiguriert sind, die Animationssteuerungseinheit (30) zu Folgendem zu veranlassen:
Empfangen von Gästedetektionsdaten von der Vielzahl von Sensoren (26, 28, 32, 38), wobei die Gästedetektionsdaten eine Präsenz von mindestens einem Gast innerhalb eines vorherbestimmten Bereichs von der animierten Figur (12) angibt;
Empfangen von Glänzendes-Objekt-Detektionsdaten von der Vielzahl von Sensoren (26, 28, 32, 38), wobei die Glänzendes-Objekt-Detektionsdaten die Detektion und den Ort von einem oder mehreren glänzenden Objekten (34, 36) angeben, die von dem mindestens einen Gast getragen werden und aus Materialien mit einer reflektierenden Oberfläche gebildet sind, die glänzend, reflektierend oder metallisch sind;
Bestimmen einer Animationssequenz der animierten Figur (12) basierend auf den Gästedetektionsdaten und Glänzendes-Objekt-Detektionsdaten, und wobei die Animationssequenz reaktive Reaktionen in Echtzeit, vorprogrammierte Reaktionen oder eine Kombination davon umfasst, wobei die animierte Figur auf glänzende Objekte reagiert, die dahingehend identifiziert werden, dass sie auf dem mindestens einen Gast getragen werden; und
Übertragen eines Steuerungssignals, das die bestimmte Animationssequenz angibt, um die animierte Figur (12) zu veranlassen, die bestimmte Animationssequenz auszuführen;
wobei das eine oder die mehreren glänzenden Objekte (34, 36) eines oder mehrere von einem Ring, einem Armreif, einem Schlüssel, Sonnenbrillen, Schmuck, Kleidung, einer Halskette, einem Messer, einer Uhr oder einem Gürtel umfassen und wobei die animierte Figur dazu konfiguriert ist, die bestimmte Animationssequenz, die durch das Steuerungssignal angegeben wird, bei Empfang des Steuerungssignals auszuführen.

2. System nach Anspruch 1, wobei die empfangenen Gästedetektionsdaten auf Informationen von einer oder mehreren Kameras (32) der Vielzahl von Sensoren (26, 28, 32, 38) basieren und wobei die Informationen verwendet werden, um ein Skelett des mindestens einen Gasts unter Verwendung von Skelettverfolgung, ein Gesicht des mindestens einen Gasts unter Verwendung von Gesichtserkennung, Körperteile des mindestens einen Gasts unter Verwendung von Körpererkennung oder eine Kombination davon zu identifizieren.

3. System nach Anspruch 2, wobei die Animationssteuerungseinheit (30) dazu konfiguriert ist, das eine oder die mehreren glänzenden Objekte (34, 36), wenn detektiert wird, dass sie getragen werden, unter einer Vielzahl von glänzenden Objekten zu selektieren, die basierend auf den Glänzendes-Objekt-Detektionsdaten identifiziert werden, durch Selektieren des glänzenden Objekts, das dem identifizierten Gesicht des mindestens einen Gasts am nächsten ist, wie durch die Skelettverfolgung, Gesichtserkennung oder eine Kombination davon bestimmt.

4. System nach Anspruch 2, wobei die Animationssteuerungseinheit (30) dazu konfiguriert ist, das glänzende Objekt (34, 36), wenn detektiert wird, dass es getragen wird, unter einer Vielzahl von glänzenden Objekten zu selektieren, die basierend auf den Glänzendes-Objekt-Detektionsdaten identifiziert werden, durch Selektieren des glänzenden Objekts, das einem identifizierten Arm oder einer identifizierten Hand des mindestens einen Gasts am nächsten ist, wie aus der Skelettverfolgung, Körpererkennung oder einer Kombination davon bestimmt.

5. System nach Anspruch 1, wobei die Glänzendes-Objekt-Detektionsdaten Glänzendes-Objekt-Daten von einem oder mehreren Reflektivitätssensoren, Magnetfeld-, Infrarot-, optischen oder induktiven Metalldetektionssensoren, Formdaten von einer oder mehreren Kameras (32) oder eine Kombination davon umfassen.

6. System nach Anspruch 1, wobei die Animationssequenz die animierte Figur (12) veranlasst, ihren Kopf zu drehen, um das glänzende Objekt (34, 36) zu verfolgen, oder zu reagieren, um eine Detektion des glänzenden Objekts (34, 36) anzugeben.

7. System nach Anspruch 1, wobei der Speicher (52) eine Vielzahl von Animationssequenzen speichert und wobei das Bestimmen der Animationssequenz ferner das Selektieren einer individuellen Animationssequenz aus der Vielzahl von Animationssequenzen umfasst.

8. System nach Anspruch 1, wobei die Animationssequenz als Reaktion darauf beendet wird, dass die Gästedetektionsdaten angeben, dass der mindestens eine Gast, der das glänzende Objekt (34, 36) trägt, nicht mehr innerhalb des vorherbestimmten Bereichs von der animierten Figur (12) ist.

9. System nach Anspruch 1, wobei die Animationssequenz beendet wird, nachdem eine vorherbestimmte Zeitdauer abgelaufen ist.

10. Verfahren, umfassend:
Empfangen von Gästedetektionsdaten von einer Vielzahl von Sensoren (26, 28, 32, 38), wobei die Gästedetektionsdaten eine Präsenz von mindestens einem Gast innerhalb eines vorherbestimmten Bereichs von einer animierten Figur angibt;
Empfangen von Glänzendes-Objekt-Detektionsdaten von der Vielzahl von Sensoren (26, 28, 32, 38), die dazu konfiguriert sind, Metallobjekte oder glänzende Objekte (34, 36) zu detektieren, wobei die Glänzendes-Objekt-Detektionsdaten die Detektion und den Ort von einem oder mehreren glänzenden Objekten (34, 36) angeben, die von dem mindestens einen Gast getragen werden und aus Materialien mit einer reflektierenden Oberfläche gebildet sind, die glänzend, reflektierend oder metallisch sind;
Bestimmen einer Animationssequenz der animierten Figur (12) basierend auf den Gästedetektionsdaten und Glänzendes-Objekt-Detektionsdaten, wobei die Animationssequenz reaktive Reaktionen in Echtzeit, vorprogrammierte Reaktionen oder eine Kombination davon umfasst, wobei die animierte Figur auf glänzende Objekte reagiert, die dahingehend identifiziert werden, dass sie auf dem mindestens einen Gast getragen werden; wobei das eine oder die mehreren glänzenden Objekte (34, 36) eines oder mehrere von einem Ring, einem Armreif, einem Schlüssel, Sonnenbrillen, Schmuck, Kleidung, einer Halskette, einem Messer, einer Uhr oder einem Gürtel umfassen; und
Übertragen eines Steuerungssignals, das die bestimmte Animationssequenz angibt, um die animierte Figur (12) zu veranlassen, die bestimmte Animationssequenz auszuführen;
Ausführen, durch die animierte Figur, der bestimmten Animationssequenz, die durch das Steuerungssignal angegeben wird, bei Empfang des Steuerungssignals.

11. Verfahren nach Anspruch 10, wobei die empfangenen Gästedetektionsdaten auf Informationen basieren, die von einer oder mehreren Kameras (32) der Vielzahl von Sensoren (26, 28, 32, 38) empfangen werden, und wobei die Informationen verwendet werden, um ein Skelett des mindestens einen Gasts unter Verwendung von Skelettverfolgung, ein Gesicht des mindestens einen Gasts unter Verwendung von Gesichtserkennung, Körperteile des mindestens einen Gasts unter Verwendung von Körpererkennung oder eine Kombination davon zu identifizieren.

12. Verfahren nach Anspruch 11, das ferner das Selektieren des einen oder der mehreren glänzenden Objekte (34, 36), wenn detektiert wird, dass sie getragen werden, unter einer Vielzahl von glänzenden Objekten umfasst, die basierend auf den Glänzendes-Objekt-Detektionsdaten identifiziert werden, durch Selektieren des glänzenden Objekts, das dem identifizierten Gesicht des mindestens einen Gasts am nächsten ist, wie durch die Skelettverfolgung, die Gesichtserkennung oder eine Kombination davon bestimmt.

13. Verfahren nach Anspruch 10, wobei die Glänzendes-Objekt-Detektionsdaten Daten von einem oder mehreren Reflektivitätssensoren, Magnetfeld-, Infrarot-, optischen oder induktiven Metalldetektionssensoren, Formdaten von einer oder mehreren Kameras (32) oder eine Kombination davon umfassen.

## Revendications

1. Système d'animation, comprenant :
une figure animée (12) ;
une pluralité de capteurs (26, 28, 32, 38) ; et
un dispositif de commande d'animation (30) comprenant un processeur (54) et une mémoire (52), la mémoire (52) contenant des instructions pouvant être exécutées par le processeur (54), les instructions étant conçues pour amener le dispositif de commande d'animation (30) à :
recevoir des données de détection de visiteur provenant de la pluralité de capteurs (26, 28, 32, 38), les données de détection de visiteur indiquant la présence d'au moins un visiteur dans un rayon prédéterminé autour de la figure animée (12) ;
recevoir des données de détection d'objet brillant provenant de la pluralité de capteurs (26, 28, 32, 38), les données de détection d'objet brillant indiquant la détection et l'emplacement d'un ou de plusieurs objets brillants (34, 36) que porte l'au moins un visiteur et qui sont formés à partir de matériaux présentant une surface réfléchissante qui sont brillants, réfléchissants ou métalliques ;
déterminer une séquence d'animation de la figure animée (12) en fonction des données de détection de visiteur et des données de détection d'objet brillant, et la séquence d'animation comprenant des réactions en temps réel, des réactions préprogrammées, ou une combinaison de celles-ci, la figure animée réagissant à des objets brillants qui sont identifiés sur l'au moins un visiteur ; et
transmettre un signal de commande indiquant la séquence d'animation déterminée pour amener la figure animée (12) à exécuter la séquence d'animation déterminée ;
l'objet ou les objets brillants (34, 36) comprenant un ou plusieurs objets parmi une bague, un bracelet, une clé, des lunettes de soleil, des bijoux, des vêtements, un collier, un couteau, une montre et une ceinture, et la figure animée étant conçue pour exécuter la séquence d'animation déterminée indiquée par le signal de commande à la suite de la réception du signal de commande.

2. Système selon la revendication 1, dans lequel les données de détection de visiteur reçues sont basées sur des informations provenant d'une ou de plusieurs caméras (32) de la pluralité de capteurs (26, 28, 32, 38), et dans lequel les informations sont employées pour identifier un squelette de l'au moins un visiteur au moyen d'une technique de suivi de squelette, un visage de l'au moins un visiteur au moyen d'une technique de reconnaissance faciale, des parties du corps de l'au moins un visiteur au moyen d'une technique de reconnaissance corporelle, ou une combinaison de ceux-ci.

3. Système selon la revendication 2, dans lequel le dispositif de commande d'animation (30) est conçu pour sélectionner le ou les objets brillants (34, 36) détectés sur le visiteur parmi une pluralité d'objets brillants identifiés sur la base des données de détection d'objet brillant en sélectionnant l'objet brillant le plus proche du visage identifié de l'au moins un visiteur déterminé par le suivi de squelette, la reconnaissance faciale, ou une combinaison de ceux-ci.

4. Système selon la revendication 2, dans lequel le dispositif de commande d'animation (30) est conçu pour sélectionner l'objet brillant (34, 36) détecté sur le visiteur parmi une pluralité d'objets brillants identifiés sur la base des données de détection d'objet brillant en sélectionnant l'objet brillant le plus proche d'un bras ou une main identifié de l'au moins un visiteur déterminé par le suivi de squelette, la reconnaissance corporelle, ou une combinaison de ceux-ci.

5. Système selon la revendication 1, dans lequel les données de détection d'objet brillant comprennent des données d'objet brillant provenant d'un ou de plusieurs capteurs de réflectivité, ou capteurs de détection de métaux à champ magnétique, à infrarouge, optiques ou inductifs, des données de forme provenant d'une ou de plusieurs caméras (32), ou une combinaison de celles-ci.

6. Système selon la revendication 1, dans lequel la séquence d'animation amène la figure animée (12) à tourner la tête pour suivre l'objet brillant (34, 36) ou à réagir pour indiquer la détection de l'objet brillant (34, 36).

7. Système selon la revendication 1, dans lequel la mémoire (52) contient une pluralité de séquences d'animation, et dans lequel la détermination de la séquence d'animation comprend, en outre, la sélection d'une séquence d'animation individuelle parmi la pluralité de séquences d'animation.

8. Système selon la revendication 1, dans lequel la séquence d'animation s'arrête en réponse au fait que les données de détection de visiteur indiquent que l'au moins un visiteur portant l'objet brillant (34, 36) ne se trouve plus dans le rayon prédéterminé autour de la figure animée (12).

9. Système selon la revendication 1, dans lequel la séquence d'animation s'arrête une fois qu'un laps de temps prédéterminé s'est écoulé.

10. Procédé, comprenant :
la réception de données de détection de visiteur provenant d'une pluralité de capteurs (26, 28, 32, 38), les données de détection de visiteur indiquant la présence d'au moins un visiteur dans un rayon prédéterminé autour d'une figure animée ;
la réception de données de détection d'objet brillant provenant de la pluralité de capteurs (26, 28, 32, 38) conçus pour détecter des objets métalliques ou des objets brillants (34, 36), les données de détection d'objet brillant indiquant la détection et l'emplacement d'un ou de plusieurs objets brillants (34, 36) que porte l'au moins un visiteur et qui sont formés à partir de matériaux présentant une surface réfléchissante qui sont brillants, réfléchissants ou métalliques ;
la détermination d'une séquence d'animation de la figure animée (12) en fonction des données de détection de visiteur et des données de détection d'objet brillant, la séquence d'animation comprenant des réactions en temps réel, des réactions préprogrammées, ou une combinaison de celles-ci, la figure animée réagissant à des objets brillants qui sont identifiés sur l'au moins un visiteur, l'objet ou les objets brillants (34, 36) comprenant un ou plusieurs objets parmi une bague, un bracelet, une clé, des lunettes de soleil, des bijoux, des vêtements, un collier, un couteau, une montre et une ceinture ; et
la transmission d'un signal de commande indiquant la séquence d'animation déterminée pour amener la figure animée (12) à exécuter la séquence d'animation déterminée ;
l'exécution, par la figure animée, de la séquence d'animation déterminée indiquée par le signal de commande à la suite de la réception du signal de commande.

11. Procédé selon la revendication 10, dans lequel les données de détection de visiteur reçues sont basées sur des informations reçues d'une ou de plusieurs caméras (32) de la pluralité de capteurs (26, 28, 32, 38), et dans lequel les informations sont employées pour identifier un squelette de l'au moins un visiteur au moyen d'une technique de suivi de squelette, un visage de l'au moins un visiteur au moyen d'une technique de reconnaissance faciale, des parties du corps de l'au moins un visiteur au moyen d'une technique de reconnaissance corporelle, ou une combinaison de ceux-ci.

12. Procédé selon la revendication 11, comprenant, en outre, la sélection de l'objet ou des objets brillants (34, 36) détectés sur le visiteur parmi une pluralité d'objets brillants identifiés sur la base des données de détection d'objet brillant en sélectionnant l'objet brillant le plus proche du visage identifié de l'au moins un visiteur déterminé par le suivi de squelette, la reconnaissance faciale, ou une combinaison de ceux-ci.

13. Procédé selon la revendication 10, dans lequel les données de détection d'objet brillant comprennent des données provenant d'un ou de plusieurs capteurs de réflectivité, ou capteurs de détection de métaux à champ magnétique, à infrarouge, optiques ou inductifs, des données de forme provenant d'une ou de plusieurs caméras (32), ou une combinaison de celles-ci.
